# EUROPEAN PATENT APPLICATION

(11) **EP 4 618 482 A1**
(43) Date of publication of application: **17.09.2025**
(21) Application number: 22964708.6
(22) Date of filing: 07.11.2022
(51) Int. Cl.: H04L 27/00

(54) **CELL DETERMINATION METHOD AND APPARATUS, AND COMMUNICATION APPARATUS AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Gunzelmann, Rainer
(86) International application number: PCT/CN2022/130446
(87) International publication number: WO 2024/098231

(57) **Abstract**

The present disclosure relates to a cell determination method and apparatus, and a communication apparatus and a storage medium, the cell determination method comprising: according to a predefined rule or indication signaling of a network device, determining cells to which at least one information domain in MC-DCI can apply; determining at least one first cell which is scheduled by the MC-DCI; and according to a relationship between the at least one first cell and the cells to which the at least one information domain in the MC-DCI can apply, determining a cell to which the at least one information domain in the MC-DCI applies. According to the present disclosure, a terminal can determine cells to which at least one information domain in MC-DCI can apply, and at least one first cell which is scheduled by the MC-DCI, such that, according to a relationship between a first cell which is actually scheduled by the MC-DCI and the cells to which the at least one information domain in the MC-DCI can apply, a cell to which the at least one information domain in the MC-DCI applies is determined. Therefore, a terminal can rationally determine a cell to which an information domain in MC-DCI specifically applies.

## Description

### FIELD

The present disclosure relates to the field of communication technologies, and in particular relates to a method, an apparatus and a system for determining a cell, a communication device and a computer-readable storage medium.

### BACKGROUND

In the related art, scheduling of one piece of downlink control information (DCI) in a cell only allows scheduling of data from one cell, such as scheduling a physical uplink shared channel (PUSCH) and a physical downlink shared channel (PDSCH). With the gradual fragmentation of a frequency resource, a demand for scheduling data from a plurality of cells simultaneously will gradually increase.

### SUMMARY

In view of this, embodiments of the present disclosure provide a method, an apparatus and a system for determining a cell, a communication device and a computer-readable storage medium to solve the technical problem in the related art.

According to a first aspect of embodiments of the present disclosure, there is provided a method for determining a cell, performed by a terminal, including: determining, according to a predefined rule or an indication signaling from a network device, a cell to which at least one information field of multi-cell scheduling downlink control information is capable of being applied; determining at least one first cell scheduled by the multi-cell scheduling downlink control information; and determining a cell to which the at least one information field of the multi-cell scheduling downlink control information is applied according to a relationship between the at least one first cell and the cell to which the at least one information field of the multi-cell scheduling downlink control information is capable of being applied.

According to a second aspect of embodiments of the present disclosure, there is provided a method for determining a cell, performed by a network device, including: determining according to a predefined rule or indicating to a terminal via an indication signaling, a cell to which at least one information field of multi-cell scheduling downlink control information is capable of being applied; determining at least one first cell scheduled by the multi-cell scheduling downlink control information; and determining a cell to which the at least one information field of the multi-cell scheduling downlink control information is applied according to a relationship between the at least one first cell and the cell to which the at least one information field of the multi-cell scheduling downlink control information is capable of being applied.

According to a third aspect of embodiments of the present disclosure, there is provided an apparatus for determining a cell, including: a processing module configured to determine, according to a predefined rule or an indication signaling from a network device, a cell to which at least one information field of multi-cell scheduling downlink control information is capable of being applied, determine at least one first cell scheduled by the multi-cell scheduling downlink control information, and determine a cell to which the at least one information field of the multi-cell scheduling downlink control information is applied according to a relationship between the at least one first cell and the cell to which the at least one information field of the multi-cell scheduling downlink control information is capable of being applied.

According to a fourth aspect of embodiments of the present disclosure, there is provided an apparatus for determining a cell, including: a processing module configured to determine according to a predefined rule or indicating to a terminal via an indication signaling, a cell to which at least one information field of multi-cell scheduling downlink control information is capable of being applied, determine at least one first cell scheduled by the multi-cell scheduling downlink control information, and determine a cell to which the at least one information field of the multi-cell scheduling downlink control information is applied according to a relationship between the at least one first cell and the cell to which the at least one information field of the multi-cell scheduling downlink control information is capable of being applied.

According to a fifth aspect of embodiments of the present disclosure, there is provided a system for determining a cell, including: a terminal, and a network device, in which the terminal is configured to implement the method for determining the cell performed by the terminal, and the network device is configured to implement the method for determining the cell performed by the network device.

According to a sixth aspect of embodiments of the present disclosure, there is provided a communication device, including: a processor; and a memory for storing a computer program, in which in a case where the computer program is executed by the processor, the method for determining the cell performed by the terminal is implemented.

According to a seventh aspect of embodiments of the present disclosure, there is provided a communication device, including: a processor; and a memory for storing a computer program, in which in a case where the computer program is executed by the processor, the method for determining the cell performed by the network device is implemented.

According to an eighth aspect of embodiments of the present disclosure, there is provided a computer-readable storage medium, configured to store a computer program that, when executed by a processor, cause the method for determining the cell performed by the terminal to be implemented.

According to a ninth aspect of embodiments of the present disclosure, there is provided a computer-readable storage medium, configured to store a computer program that, when executed by a processor, cause the method for determining the cell performed by the network device to be implemented.

According to embodiments of the present disclosure, the terminal may determine, according to the predefined rule or the indication signaling from the network device, the cell to which the at least one information field of the multi-cell scheduling downlink control information is capable of being applied. The terminal may then determine the at least one first cell scheduled by the multi-cell scheduling downlink control information, namely, a cell actually scheduled by the multi-cell scheduling downlink control information (MC-DCI). Further, the terminal may determine the cell to which the at least one information field of the multi-cell scheduling downlink control information is applied according to a relationship between the first cell actually scheduled by the MC-DCI and the cell to which the at least one information field of the multi-cell scheduling downlink control information is capable of being applied. Accordingly, the terminal may reasonably determine the cell to which the information field of the multi-cell scheduling downlink control information is specifically applied, even if the cell actually scheduled by the multi-cell scheduling downlink control information is different from the cell to which the information field of the multi-cell scheduling downlink control information is capable of being applied, issues with executing actions based on the MC-DCI can be avoided.

### BRIEF DESCRIPTION OF THE DRAWINGS

In order to clearly illustrate technical solutions in embodiments of the present disclosure, a brief introduction of drawings used in descriptions of embodiments is given below. Obviously, the drawings in the following descriptions are only some embodiments of the present disclosure, and for those skilled in the art, other drawings may be obtained according to these drawings without creative labor.
FIG. 1 is a schematic flowchart illustrating a method for determining a cell according to an embodiment of the present disclosure.
FIG. 2 is a schematic flowchart illustrating a method for determining a cell according to an embodiment of the present disclosure.
FIG. 3 is a schematic flowchart illustrating a method for determining a cell according to an embodiment of the present disclosure.
FIG. 4 is a schematic flowchart illustrating a method for determining a cell according to an embodiment of the present disclosure.
FIG. 5 is a schematic flowchart illustrating a method for determining a cell according to an embodiment of the present disclosure.
FIG. 6 is a schematic flowchart illustrating a method for determining a cell according to an embodiment of the present disclosure.
FIG. 7 is a schematic flowchart illustrating a method for determining a cell according to an embodiment of the present disclosure.
FIG. 8 is a schematic flowchart illustrating a method for determining a cell according to an embodiment of the present disclosure.
FIG. 9 is a schematic flowchart illustrating a method for determining a cell according to an embodiment of the present disclosure.
FIG. 10 is a schematic flowchart illustrating a method for determining a cell according to an embodiment of the present disclosure.
FIG. 11 is a schematic flowchart illustrating a method for determining a cell according to an embodiment of the present disclosure.
FIG. 12 is a schematic flowchart illustrating a method for determining a cell according to an embodiment of the present disclosure.
FIG. 13 is a schematic block diagram illustrating an apparatus for determining a cell according to an embodiment of the present disclosure.
FIG. 14 is a schematic block diagram illustrating an apparatus for determining a cell according to an embodiment of the present disclosure.
FIG. 15 is a schematic block diagram illustrating a device for determining a cell according to an embodiment of the present disclosure.
FIG. 16 is a schematic block diagram illustrating a device for determining a cell according to an embodiment of the present disclosure.

### DETAILED DESCRIPTION

Reference will be made clearly and completely technical solutions in the embodiments of the present disclosure with accompanying drawings. Obviously, the embodiments described here are only part of the embodiments of the present disclosure and are not all embodiments of the present disclosure. Based on the embodiments of the present disclosure, other embodiments obtained by those skilled in the art without creative labor are within scope of the present disclosure.

Terms used herein in embodiments of the present disclosure are only for the purpose of describing specific embodiments, but should not be construed to limit embodiments of the present disclosure. As used in embodiments of the present disclosure and the appended claims, "a/an" and "the" in singular forms are intended to include plural forms, unless clearly indicated in the context otherwise. It should also be understood that, the term "and/or" used herein represents and includes any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

For purposes of brevity and ease of understanding, the terms used herein for describing the relationship of size are "greater than" or "less than", "higher than" or "lower than". However, it may be understood to those skilled in the art that the term "greater than" also encompasses the meaning of "greater than or equal to", the term "less than" also encompasses the meaning of "less than or equal to"; the term "higher than" encompasses the meaning of "higher than or equal to", and the term "lower than" also encompasses the meaning of "lower than or equal to".

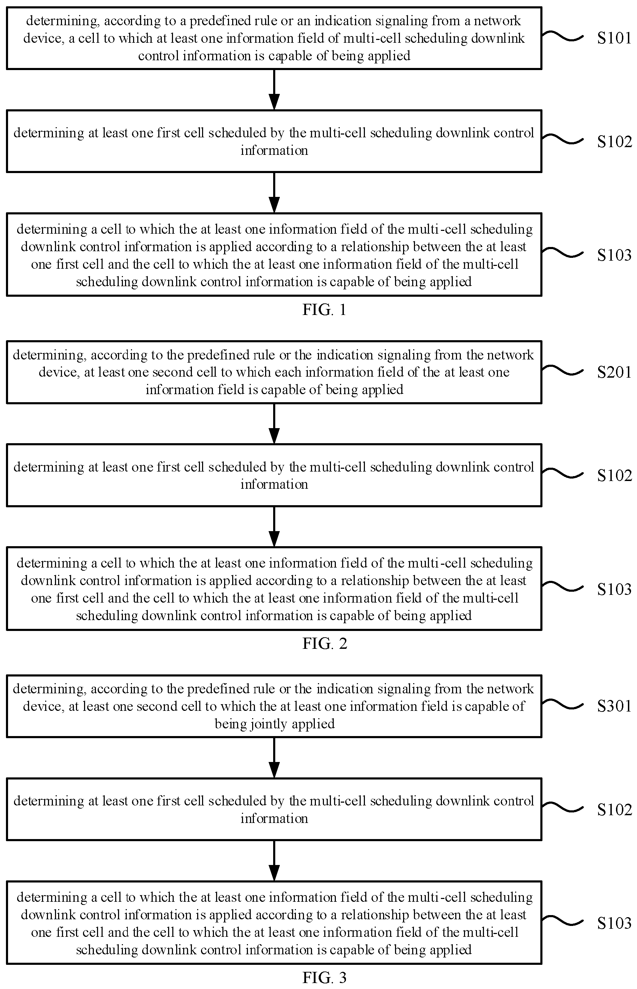

FIG. 1 is a schematic flowchart illustrating a method for determining a cell according to an embodiment of the present disclosure. The method for determining the cell shown in the present embodiment may be performed by a terminal, and the terminal includes but is not limited to communication devices such as a mobile phone, a tablet computer, a wearable device, a sensor, and an Internet of Things device. The terminal may communicate with a network device, and the network device includes but is not limited to network devices in 4G, 5G, 6G and other communication systems, such as a base station, a core network, and the like.

As shown in FIG. 1, the method for determining the cell may include the following steps.

In step S101, a cell to which at least one information field of multi-cell scheduling downlink control information is capable of being applied is determined according to a predefined rule or an indication signaling from a network device.

In step S102, at least one first cell scheduled by the multi-cell scheduling downlink control information is determined.

In step S103, a cell to which the at least one information field of the multi-cell scheduling downlink control information is applied is determined according to a relationship between the at least one first cell and the cell to which the at least one information field of the multi-cell scheduling downlink control information is capable of being applied.

It is noted that, in an embodiment of the present disclosure, the cell to which the at least one information field of the multi-cell scheduling downlink control information is capable of being applied may be determined according to the predefined rule or the indication signaling from the network device before receiving the multi-cell scheduling downlink control information. The at least one first cell scheduled by the multi-cell scheduling downlink control information may be the at least one first cell actually scheduled by the received multi-cell scheduling downlink control information this time which is determined when receiving the multi-cell scheduling downlink control information. The cell to which the at least one information field of the multi-cell scheduling downlink control information is applied is a cell to which the at least one information field of the multi-cell scheduling downlink control information is actually applied.

There may be a plurality of cases between the cell to which at least one information field of multi-cell scheduling downlink control information is capable of being applied and the at least one first cell scheduled by the multi-cell scheduling downlink control information, such as all identical, all different, partially identical, etc., then for each case, it is necessary to reasonably determine the cell to which the at least one information field of the multi-cell scheduling downlink control information is actually applied.

For a case where the cell to which the at least one information field of the multi-cell scheduling downlink control information is capable of being applied is all identical with the at least one first cell scheduled by the multi-cell scheduling downlink control information, it may be determined that the at least one first cell scheduled by the multi-cell scheduling downlink control information is the cell to which the at least one information field of the multi-cell scheduling downlink control information is applied

For a case where the cell to which the at least one information field of the multi-cell scheduling downlink control information is capable of being applied is all different from or partially identical with the at least one first cell scheduled by the multi-cell scheduling downlink control information, a process of determining the cell to which the at least one information field of the multi-cell scheduling downlink control information is actually applied is relatively complex, details of which will be described in the following embodiments..

The determination manner for at least one first cell actually scheduled by the multi-cell scheduling downlink control information received each time can be set as needed, for example, can be indicated by the network device or determined based on the predefined rule, which will may be limited in the present disclosure.

In an embodiment, the multi-cell scheduling downlink control information may be simply referred to as MC-DCI, for example. The MC-DCI is configured to schedule a plurality of cells, specifically it may be configured to schedule data from the plurality of cells, such as scheduling a physical uplink shared channel (PUSCH), a physical downlink shared channel (PDSCH), and the like of one or more cells in the plurality of cells, thereby realizing scheduling of the plurality of cells through one DCI. Here, MC represents multi-cell.

In an embodiment, a format of the multi-cell scheduling downlink control information may be the same as a format of a traditional (legacy) DCI (e.g., a DCI format 0_0, a DCI format 0_1, etc.), or may be a newly defined format, e.g., a DCI format 0_3, a DCI format 1_3, etc.

In an embodiment, the multi-cell scheduling downlink control information may be scrambled by a radio network temporary identity (RNTI), for example, may be scrambled by a cell radio network temporary identity (C-RNTI), or may be scrambled by a newly defined RNTI.

The multi-cell scheduling downlink control information may include a plurality of information fields. In a case of scheduling the cell with the multi-cell scheduling downlink control information, the information field of the multi-cell scheduling downlink control information may be applied to a scheduled cell, and the terminal may determine information of the scheduled cell to which the information field is applied, or perform an operation on the scheduled cell to which the information field is applied, according to information indicated by the information field. For example, taking a bandwidth part (BWP) information field in the multi-cell scheduling downlink control information as an example, it is determined that the BWP information field is applied to a cell, Cell#1, for example, then the terminal may perform a BWP switching operation on the Cell#1 according to information indicated by the BWP information field.

Due to demands of a network environment, the cell to which the information field of the multi-cell scheduling downlink control information is capable of being applied may be limited. According to an embodiment of the present disclosure, the terminal may determine the cell to which the at least one information field of the multi-cell scheduling downlink control information is capable of being applied according to the predefined rule or the indication signaling from the network device.

The multi-cell scheduling downlink control information may include the plurality of information fields. One part of the plurality of information fields is applied to all scheduled cells only, and other part of the information fields (such as a Type 1 information field) may only be applied to some of the scheduled cells in consideration of scheduling flexibility and MC DCI signaling overhead. Therefore, how to determine the cell to which the other part of the information fields is actually applied is an urgent issue to be solved.

According to embodiments of the present disclosure, the terminal may determine, according to the predefined rule or the indication signaling from the network device, the cell to which the at least one information field of the multi-cell scheduling downlink control information is capable of being applied. The terminal may then determine the at least one first cell scheduled by the multi-cell scheduling downlink control information, namely, a cell actually scheduled by the multi-cell scheduling downlink control information (MC-DCI). Further, the terminal may determine the cell to which the at least one information field of the multi-cell scheduling downlink control information is applied according to a relationship between the first cell actually scheduled by the MC-DCI and the cell to which the at least one information field of the multi-cell scheduling downlink control information is capable of being applied. Accordingly, the terminal may reasonably determine the cell to which the at least one information field of the multi-cell scheduling downlink control information is specifically applied, even if the cell actually scheduled by the multi-cell scheduling downlink control information is different from the cell to which the at least one information field of the multi-cell scheduling downlink control information is capable of being applied, issues with executing actions based on the MC-DCI can be avoided.

The at least one information field of the multi-cell scheduling downlink control information may be applied to some of the scheduled cells only, rather than being applied to all scheduled cells. For example, the at least one information field of the multi-cell scheduling downlink control information may be the Type 1 information field in the multi-cell scheduling downlink control information, or may be other types of information fields. Selection can be made specifically as needed, which will not be limited the present disclosure.

In an embodiment of the present disclosure, the indication may include at least one of:
a radio resource control (RRC) layer signaling;
a media access control layer signaling, such as a media access control control element (MAC CE); or
a physical layer signaling, such as downlink control information (which may be the traditional DCI or the multi-cell scheduling downlink control information).

In an embodiment of the present disclosure, the cell to which the at least one information field of the multi-cell scheduling downlink control information is capable of being applied may include at least one of:
at least one second cell to which the at least one information field of the multi-cell scheduling downlink control information is capable of being applied, for example, the at least one information field of the multi-cell scheduling downlink control information is capable of being applied to some cells among cells capable of being scheduled by the multi-cell scheduling downlink control information (some cells belong to the second cell); or
no cell to which the at least one information field of the multi-cell scheduling downlink control information is capable of being applied, for example, the at least one information field of the multi-cell scheduling downlink control information is incapable of being applied to any cell in the cells capable of being scheduled by the multi-cell scheduling downlink control information.

The cell to which the at least one information field of the multi-cell scheduling downlink control information is capable of being applied may be understood as a cell set. In a case where the at least one information field of the multi-cell scheduling downlink control information is incapable of being applied to any cell, the set is a null set. In a case where the at least one information field of the multi-cell scheduling downlink control information is capable of being applied to at least one second cell, an element included in the set is the at least one second cell.

In an embodiment, there may be no intersection between the first cell actually scheduled by the multi-cell scheduling downlink control information and the cell to which the at least one information field of the multi-cell scheduling downlink control information is capable of being applied, this case may be called an error case. The terminal may not parse the multi-cell scheduling downlink control information, or the terminal may continue to parse the multi-cell scheduling downlink control information, but at least one information field of the multi-cell scheduling downlink control information is not applied to any cell, which is beneficial to saving terminal resources.

In an embodiment, in a case where the cell to which the at least one information field of the multi-cell scheduling downlink control information is capable of being applied is the at least one second cell to which the at least one information field of the multi-cell scheduling downlink control information is capable of being applied, there may be or may not be an intersection between the first cell actually scheduled by the multi-cell scheduling downlink control information and the second cell. The specific situation is described in detail in subsequent embodiments.

The following embodiments mainly illustrate the technical solution of the present disclosure for an example of the cell to which the at least one information field of the multi-cell scheduling downlink control information is capable of being applied being the at least one second cell to which the at least one information field of the multi-cell scheduling downlink control information is capable of being applied.

FIG. 2 is a schematic flowchart illustrating a method for determining a cell according to an embodiment of the present disclosure. As shown in FIG. 2, determining, according to the predefined rule or the indication signaling from the network device, the cell to which the at least one information field of the multi-cell scheduling downlink control information is capable of being applied includes the following step.

In step 201, at least one second cell to which each information field of the at least one information field is capable of being applied is determined according to the predefined rule or the indication signaling from the network device.

In an embodiment, the at least one information field of the multi-cell scheduling downlink control information may include a plurality of information fields. Cells to which respective information fields of the plurality of information fields are capable of being applied may be different, for example, partially different, or completely different. According to this embodiment, the terminal may determine the second cell to which each information field is capable of being applied according to the predefined rule or the indication signaling of the network device.

For example, for two information fields, field#1 and field#2, it may be determined that the field#1 is capable of being applied to a cell Cell#1 and a cell Cell#2, and it may be determined that the field#2 is capable of being applied to the cell Cell#2 and a cell Cell#3.

FIG. 3 is a schematic flowchart illustrating a method for determining a cell according to an embodiment of the present disclosure. As shown in FIG. 3, determining, according to the predefined rule or the indication signaling from the network device, the cell to which the at least one information field of the multi-cell scheduling downlink control information is capable of being applied includes the following step.

In step 301, at least one second cell to which the at least one information field is capable of being jointly applied is determined according to the predefined rule or the indication signaling from the network device.

In an embodiment, the at least one information field of the multi-cell scheduling downlink control information may include a plurality of information fields. Cells to which respective information fields of the plurality of information fields are capable of being applied may be the identical. According to this embodiment, the terminal may determine the second cell to which the plurality of information fields are capable of being jointly applied according to the predefined rule or the indication signaling of the network device.

For example, for two information fields, field#1 and field#2, it may be determined that the field#1 and the field#2 are capable of being jointly applied to a cell Cell#1 and a cell Cell#2. That is, the field#1 is capable of being applied to the cell Cell#1 and the cell Cell#2, and the field#2 is capable of being applied to the cell Cell#1 and the cell Cell#2.

In an embodiment, the predefined rule includes at least one of:
determining a cell with an identifier being a predefined identifier as the at least one second cell; or
a cell corresponding to a predefined sorting number being as the at least one second cell in a case where a cell capable of being scheduled by the multi-cell scheduling downlink control information or the at least one first cell is sorted in a predefined order.

In an embodiment, the predefined rule may define that the cell with an identifier (e.g., cell ID) being the predefined identifier is the second cell, and the terminal may determine that the cell having the predefined identifier is the second cell.

For example, if the predefined identifiers are 1 and 3, then two cells, Cell#1 (cell ID is 1) and Cell#3 (cell ID is 3), may be determined as the second cells. Further, the cell to which the at least one information field of the multi-cell scheduling downlink control information is applied may be determined based on a relationship between the second cell and the first cell, which will be specifically described in the subsequent embodiments.

In an embodiment, the predefined rule may define that the cell corresponding to the predefined sorting number is the second cell in a case where cells are sorted in the predefined order. The cells used to be sorted include, but are not limited to, a cell capable of being scheduled by the multi-cell scheduling downlink control information, or the at least one first cell. Then the terminal may determine the cell corresponding to the predefined sorting number as the second cell among the sorted cells.

For example, in a case where the predefined sorting numbers are 1 and 3, then it may be determined that among the cells sorted in the predefined order, cells with an order number 1 and an order number 3 are the second cells. Further, the cell to which the at least one information field of the multi-cell scheduling downlink control information is applied may be determined based on a relationship between the second cell and the first cell, which will be specifically described in the subsequent embodiments.

It should be noted that the predefined order is not limited to the order in the above embodiment, and may be, for example, a descending order of the cell identifiers or an ascending order of the cell identifiers, etc.

In an embodiment, determining, according to the indication signaling from the network device, the at least one second cell to which the at least one information field of the multi-cell scheduling downlink control information is capable of being applied includes at least one of:
determining a cell corresponding to an identifier indicated by the indication signaling as the at least one second cell;
determining a cell corresponding to an order number indicated by the indication signaling as the at least one second cell in a case where a cell capable of being scheduled by the multi-cell scheduling downlink control information is sorted in a predefined order.

In an embodiment, the network device may indicate the identifier carried by the indication signaling to the terminal. The terminal may determine that a cell corresponding to the identifier indicated by the indication signaling is the second cell. The identifier indicated by the network device may be an identifier of a cell in the cell capable of being scheduled by multi-cell scheduling downlink control information.

For example, the identifiers indicated by the network device through the indication signaling are 1 and 3, then the terminal may determine that two cells, Cell#1 (the cell ID is 1) and Cell#3 (the cell ID is 3), are the second cells.

In an embodiment, the network device may indicate the order number carried by the indication signaling to the terminal. The terminal may determine that the cell corresponding to the order number indicated by the indication signaling is the second cell among the cell sorted in the predefined order. The cells used to be sorted include, but are not limited to, a cell capable of being scheduled by the multi-cell scheduling downlink control information, or the at least one first cell.

Taking sorting of four cells, Cell#1, Cell#2, Cell#3 and Cell#4, as an example, a sorted result is Cell#2, Cell#4, Cell#1 and Cell#3. In response to the order numbers indicated by the network device being 1 and 3, it may be determined that Cell#2 sorted first and Cell#1 sorted third are the second cells. In response to the order numbers indicated by the network device being 3 and 5, since there is no cell sorted fifth in the sorting, only Cell#1 sorted third is determined as the second cell. In response to the order number indicated by the network device being 5, since there is no cell sorted fifth in the sorting, it may be determined that there is no second cell, or the second cell is described as a null set. In this case, the at least one information field in the multi-cell scheduling downlink control information is incapable of being applied to any cell. For sorting of the at least one first cell, it may be determined that at least one information field of the multi-cell scheduling downlink control information is incapable of being applied to any cell.

It should be noted that the predefined order is not limited to the order in the above embodiment, and may be, for example, a descending order of the cell identifiers or an ascending order of the cell identifiers, etc.

For example, taking sorting cells in the ascending order of the cell identifiers as an example, for cells Cell#5, Cell#7, Cell#3, Cell#2, the sorted result is Cell#2, Cell#3, Cell#5, Cell#7. A correspondence between the order number and the cell may be shown in the following Table 1.

**Table 1**

| order number | cell |
|---|---|
| 1 | Cell#2 |
| 2 | Cell#3 |
| 3 | Cell#5 |
| 4 | Cell#7 |

According to Table 1, in a case where the order numbers indicated by the received indication signaling are 2 and 4, it may be determined that Cell#3 corresponding to the order number 2 and Cell#7 corresponding to the order number 4 are the second cells.

It may be understood that each element in the Table 1 exists independently. These elements are illustratively listed in the same table, but it does not mean that all elements in the table must exist at the same time as shown in the table. A value of each element is independent of a value of any other element in the Table 1. Therefore, those skilled in the art may understand that the value of each element in the Table 1 is an independent embodiment.

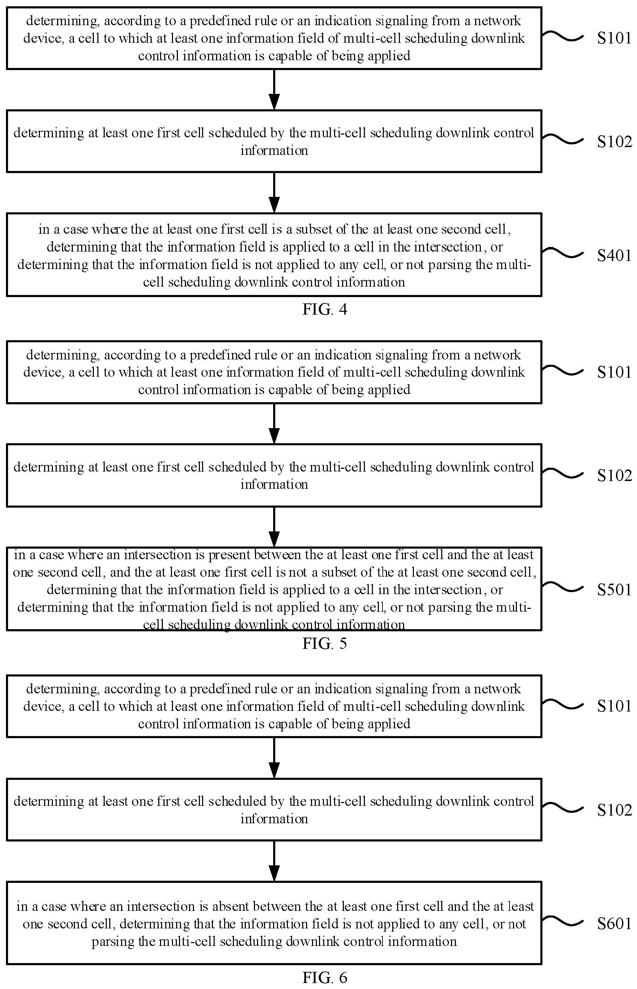

FIG. 4 is a schematic flowchart illustrating a method for determining a cell according to an embodiment of the present disclosure. As shown in FIG. 4, determining the cell to which the at least one information field of the multi-cell scheduling downlink control information is applied according to the relationship between the at least one first cell and the cell to which the at least one information field of the multi-cell scheduling downlink control information is capable of being applied includes the following step.

In step S401, in a case where the at least one first cell is a subset of the at least one second cell, it is determined that the information field is applied to the at least one first cell, or it is determined that the information field is not applied to any cell, or parsing the multi-cell scheduling downlink control information is not performed.

In an embodiment, in a case where the at least one first cell is a subset of the at least one second cell, that is, the first cell scheduled by the multi-cell scheduling downlink control information belongs to the second cell to which the at least one information field of the multi-cell scheduling downlink control information is capable of being applied, it may be determined that the at least one information field of the multi-cell scheduling downlink control information is applied to the at least one first cell, or, it may be determined that the at least one information field in the multi-cell scheduling downlink control information is not applied to any cell, or, parsing the multi-cell scheduling downlink control information is not performed.

The following takes BWP information field of the multi-cell scheduling downlink control information as an example.

For example, it is determined that the cell corresponding to the identifier (e.g., cell identifier) specified by the predefined rule or indicated by the network device is the at least one second cell. The second cells to which the BWP information field is capable of being applied are the cell Cell#1 (the cell identifier is 1) and the cell Cell#2 (the cell identifier is 1), and the first cell scheduled by the multi-cell scheduling downlink control information received this time is Cell#1. It may be determined that {Cell#1} is a subset of {Cell#1, Cell#2}, then it may be determined that the BWP information field is applied to Cell#1, or it may be determined that the BWP information field is not applied to any cell, or parsing the multi-cell scheduling downlink control information received this time is not performed.

For example, in a case where the cells capable of being scheduled by the multi-cell scheduling downlink control information are sorted in the predefined order, it is determined that the cell corresponding to the predefined sorting or order number is the at least one second cell. The second cells to which the BWP information field is capable of being applied are cells corresponding to order numbers 1 and 2. The first cell scheduled by the multi-cell scheduling downlink control information received this time is Cell#1, which is sorted in the predefined order as Cell#1, among which there is only the cell Cell#1 sorted first, without a cell sorted second. It may be determined that a set of first cells {cell corresponding to order number 1} is a subset of a set of second cells {cell corresponding to order number 1, cell corresponding to order number 2}. Further, it may be determined that the BWP information field is applied to the cell Cell#1 corresponding to the order number 1, or it may be determined that the BWP information field is not applied to any cell, or parsing the multi-cell scheduling downlink control information received this time is not performed.

In an embodiment, in a case where the at least one second cell is a subset of the at least one first cell, it is determined that the information field is applied to the at least one second cell, or it is determined that the information field is not applied to any cell, or parsing the multi-cell scheduling downlink control information is not performed.

In an embodiment, in a case where the at least one second cell is a subset of the at least one first cell, that is, the second cell to which the at least one information field of the multi-cell scheduling downlink control information is capable of being applied belongs to the first cell scheduled by the multi-cell scheduling downlink control information, it may be determined that the at least one information field of the multi-cell scheduling downlink control information is applied to the at least one second cell, or, it may be determined that the at least one information field in the multi-cell scheduling downlink control information is not applied to any cell, or, parsing the multi-cell scheduling downlink control information is not performed.

The following takes BWP information field of the multi-cell scheduling downlink control information as an example.

For example, it is determined that the cell corresponding to the identifier (e.g., cell identifier) specified by the predefined rule or indicated by the network device is the at least one second cell. The second cells to which the BWP information field is capable of being applied are the cell Cell#1, and the first cells scheduled by the multi-cell scheduling downlink control information received this time are Cell#1 and Cell#2. It may be determined that {Cell#1} is a subset of {Cell#1, Cell#2}, then it may be determined that the BWP information field is applied to Cell#1, or it may be determined that the BWP information field is not applied to any cell, or parsing the multi-cell scheduling downlink control information received this time is not performed.

For example, in a case where the cells capable of being scheduled by the multi-cell scheduling downlink control information are sorted in the predefined order, it is determined that the cell corresponding to the predefined sorting or order number is the at least one sl. The second cell to which the BWP information field is capable of being applied is a cell corresponding to an order number 2. The first cells scheduled by the multi-cell scheduling downlink control information received this time are Cell#1 and Cell#2, which are sorted in the predefined order (such as, an ascending order of identifiers) as Cell#1, Cell#2. The sorting includes not only the cell with the order number 2, but also the cell with the order number 1. It may be determined that a set of second cells {cell corresponding to order number 2} is a subset of a set of first cells {cell corresponding to order number 1, cell corresponding to order number 2}. Further, it may be determined that the BWP information field is applied to the cell Cell#2 corresponding to the order number 2, or it may be determined that the BWP information field is not applied to any cell, or parsing the multi-cell scheduling downlink control information received this time is not performed.

FIG. 5 is a schematic flowchart illustrating a method for determining a cell according to an embodiment of the present disclosure. As shown in FIG. 5, determining the cell to which the at least one information field of the multi-cell scheduling downlink control information is applied according to the relationship between the at least one first cell and the cell to which the at least one information field of the multi-cell scheduling downlink control information is capable of being applied includes the following step.

In step S501, in a case where an intersection is present between the at least one first cell and the at least one second cell, and the at least one first cell is not a subset of the at least one second cell, it is determined that the information field is applied to a cell in the intersection, or it is determined that the information field is not applied to any cell, or parsing the multi-cell scheduling downlink control information is not performed.

In an embodiment, the intersection is present between the at least one first cell and the at least one second cell, and the at least one first cell is not a subset of the at least one second cell, that is, some of the first cells scheduled by the multi-cell scheduling downlink control information belong to the second cell to which the at least one information field of the multi-cell scheduling downlink control information is capable of being applied, then the at least one first cell and the at least one second cell have some cells that are the same, while others are different.

For this case, three approaches may be adopted. A first case is to mainly consider presence of conflicts, then this case may be regarded as an error case, and an action performed by the terminal is not to parse the multi-cell scheduling downlink control information. A second case is to mainly consider a part without conflicts, that is, the intersection between the at least one first cell and the at least one second cell, then it may be determined that the at least one information field of the multi-cell scheduling downlink control information is applied to the cell in the intersection. A third case is to determine that the information field is not applied to any cell. This case still needs to parse the multi-cell scheduling downlink control information, but the information field in the multi-cell scheduling downlink control information (that is, at least one information field in the multi-cell scheduling downlink control information) is not applied to any cell, and other information fields in the multi-cell scheduling downlink control information are still normally applied to the cells to which they should be applied.

The following takes BWP information field of the multi-cell scheduling downlink control information as an example.

For example, it is determined that the cell corresponding to the identifier (e.g., cell identifier) specified by the predefined rule or indicated by the network device is the at least one second cell. The second cells to which the BWP information field is capable of being applied are the cell Cell#1 and the cell Cell#2, and the first cells scheduled by the multi-cell scheduling downlink control information received this time are Cell#1 and Cell#3. It may be determined that there is an intersection {Cell#1} between {Cell#1, Cell#3} and {Cell#1, Cell#2}. For this case, assumed that the predefined rule specifies or the network device indicates that the at least one information field in the multi-cell scheduling downlink control information is applied to the cell in the intersection, then it may be determined that the BWP information field is applied to the cell Cell#1 in the intersection {Cell#1}. Assumed that the predefined rule specifies or the network device indicates that this case is an error case, then the terminal may regard this case as the error case and does not parse the multi-cell scheduling downlink control information; or, the terminal may determine that the BWP information field is not applied to any cell, but information fields other than the BWP information field are still normally applied to the cell to which they should be applied, for example, a frequency domain resource allocation (FDRA) field is still normally applied to the cell to which the FDRA field is applied.

For example, in a case where the cells capable of being scheduled by the multi-cell scheduling downlink control information are sorted in the predefined order, it is determined that the cell corresponding to the predefined sorting or order number is the at least one second cell. For example, the second cells to which the BWP information field is capable of being applied are cells corresponding to order numbers 1 and 3. The first cells scheduled by the multi-cell scheduling downlink control information received this time are Cell#1 and Cell#3, which are sorted in the predefined order as Cell#1 and Cell#3, among which there are only cells sorted first and second, without a cell sorted third. It may be determined that the second cell is Cell#1, and there is an intersection {Cell#1} between the set of second cells {Cell#1} and the set of first cells {Cell#1, Cell#2}, and the set {Cell#1, Cell#2} is not the subset of the sent {Cell#1}. For this case, assumed that the predefined rule specifies or the network device indicates that the at least one information field in the multi-cell scheduling downlink control information is applied to the cell in the intersection, then it may be determined that the BWP information field is applied to the cell Cell#1 in the intersection {Cell#1}. Assumed that the predefined rule specifies or the network device indicates that this case is an error case, then the terminal may regard this case as the error case and does not parse the multi-cell scheduling downlink control information; or, the terminal may determine that the BWP information field is not applied to any cell, but information fields other than the BWP information field are still normally applied to the cell to which they should be applied, for example, the FDRA field is still normally applied to the cell to which the FDRA field is applied.

FIG. 6 is a schematic flowchart illustrating a method for determining a cell according to an embodiment of the present disclosure. As shown in FIG. 6, determining the cell to which the at least one information field of the multi-cell scheduling downlink control information is applied according to the relationship between the at least one first cell and the cell to which the at least one information field of the multi-cell scheduling downlink control information is capable of being applied includes the following step.

In step S601, in a case where an intersection is absent between the at least one first cell and the at least one second cell, it is determined that the information field is not applied to any cell, or parsing the multi-cell scheduling downlink control information is not performed.

In an embodiment, in a case where an intersection is absent between the at least one first cell and the at least one second cell, the first cell scheduled by the multi-cell scheduling downlink control information has no same cell with the second cell to which the at least one information field of the multi-cell scheduling downlink control information is capable of being applied, then the at least one information field in the multi-cell scheduling downlink control information is applied to any cell.

Therefore, for this case, it may be determined that the at least one information field in the multi-cell scheduling downlink control information is applied to any cell, or this case is regarded as an error case, and the terminal does not parse the multi-cell scheduling downlink control information.

It should be noted that the terminal determining that the at least one information field in the multi-cell scheduling downlink control information is applied to any cell is different from the terminal not parsing the multi-cell scheduling downlink control information. The terminal determining that the at least one information field of the multi-cell scheduling downlink control information is applied to any cell, which means that for the at least one information field of the multi-cell scheduling downlink control information, the terminal does not apply it to any cell, but for information fields other than the at least one information field of the multi-cell scheduling downlink control information, it may still be normally applied to the cell scheduled by the multi-cell scheduling downlink control information, and does not parse the multi-cell scheduling downlink control information.

The following takes BWP information field of the multi-cell scheduling downlink control information as an example.

For example, it is determined that the cell corresponding to the identifier (e.g., cell identifier) specified by the predefined rule or indicated by the network device is the at least one second cell. The second cells to which the BWP information field is capable of being applied are the cell Cell#1 and the cell Cell#3, and the first cells scheduled by the multi-cell scheduling downlink control information received this time are Cell#2 and Cell#3. It may be determined that there is no intersection between {Cell#1, Cell#3} and {Cell#2, Cell#4}. For this case, assumed that the predefined rule specifies or the network device indicates that the information field is not applied to any cell, then it may be determined that the BWP information field is not applied to any cell. Assumed that the predefined rule specifies or the network device indicates that this case is an error case, then the terminal may regard this case as the error case and does not parse the multi-cell scheduling downlink control information.

For example, in a case where the cells capable of being scheduled by the multi-cell scheduling downlink control information are sorted in the predefined order, it is determined that the cell corresponding to the predefined sorting or order number is the at least one second cell. For example, the second cells to which the BWP information field is capable of being applied are cells corresponding to order numbers 3 and 4. The first cells scheduled by the multi-cell scheduling downlink control information received this time are Cell#2 and Cell#4, which are sorted in the predefined order as Cell#2 and Cell#4, among which there are only cells sorted first and second, without cells sorted third and fourth. It may be determined that the set of second cells is a null set, and there is no intersection between the set of second cells and the set of first cells {Cell#2, Cell#4}. For this case, assumed that the predefined rule specifies or the network device indicates that the information field is not applied to any cell, then it may be determined that the BWP information field is not applied to any cell. Assumed that the predefined rule specifies or the network device indicates that this case is an error case, then the terminal may regard this case as the error case and does not parse the multi-cell scheduling downlink control information.

In an embodiment, the terminal does not expect that an intersection is absent between the at least one first cell scheduled by the multi-cell scheduling downlink control information and the at least one second cell.

Since there is no intersection between the first cell and the second cell, the terminal may determine that the at least one information field of the multi-cell scheduling downlink control information is not applied to any cell, or does not parse the multi-cell scheduling downlink control information, which wastes communication resources to a certain extent. Therefore, the terminal does not expect that an intersection is absent between the at least one first cell scheduled by the multi-cell scheduling downlink control information and the at least one second cell. Correspondingly, in a case of sending the multi-cell scheduling downlink control information to the terminal, the network device may set that the intersection between the at least one first cell scheduled by the multi-cell scheduling downlink control information and the at least one second cell, which is beneficial for avoiding waste of the communication resources.

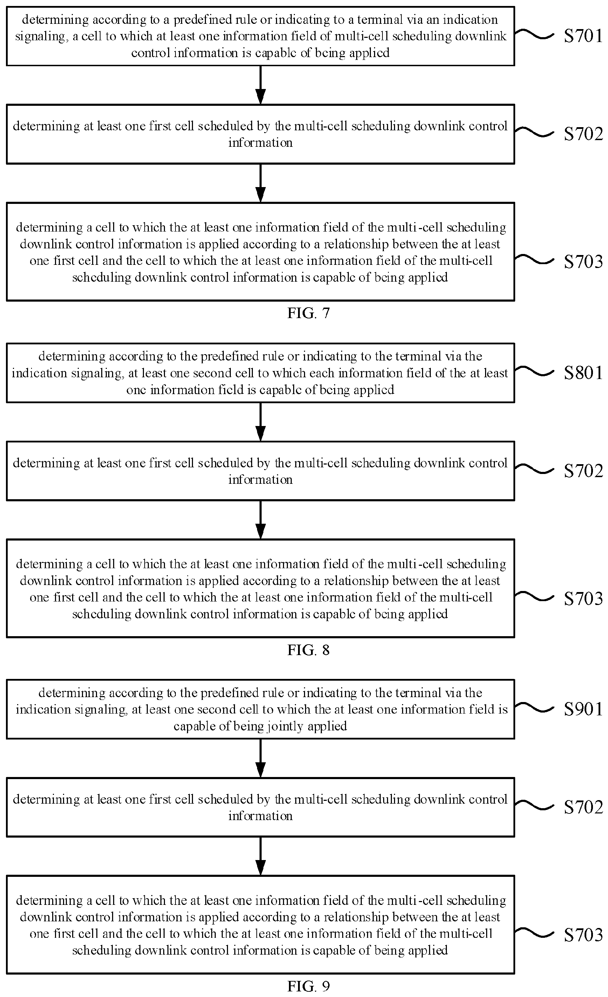

FIG. 7 is a schematic flowchart illustrating a method for determining a cell according to an embodiment of the present disclosure. The method for determining the cell shown in the present embodiment may be performed by a network device, and the network device may communicate with the terminal. The network device includes, but is not limited to, a 4G base station, a 5G base station, a 6G base station and base stations in other communication systems. The terminal includes but is not limited to communication devices such as a mobile phone, a tablet computer, a wearable device, a sensor, and an Internet of Things device.

As shown in FIG. 7, the method for determining the cell may include the following steps.

In step S701, a cell to which at least one information field of multi-cell scheduling downlink control information is capable of being applied is determined according to a predefined rule or indicated to a terminal via an indication signaling.

In step S702, at least one first cell scheduled by the multi-cell scheduling downlink control information is determined.

In step S703, a cell to which the at least one information field of the multi-cell scheduling downlink control information is applied is determined according to a relationship between the at least one first cell and the cell to which the at least one information field of the multi-cell scheduling downlink control information is capable of being applied.

It is noted that, in an embodiment of the present disclosure, the cell to which the at least one information field of the multi-cell scheduling downlink control information is capable of being applied may be determined according to the predefined rule or the indication signaling from the network device before receiving the multi-cell scheduling downlink control information. The at least one first cell scheduled by the multi-cell scheduling downlink control information may be the at least one first cell actually scheduled by the received multi-cell scheduling downlink control information this time which is determined when receiving the multi-cell scheduling downlink control information. The cell to which the at least one information field of the multi-cell scheduling downlink control information is applied is a cell to which the at least one information field of the multi-cell scheduling downlink control information is actually applied.

There may be a plurality of cases between the cell to which at least one information field of multi-cell scheduling downlink control information is capable of being applied and the at least one first cell scheduled by the multi-cell scheduling downlink control information, such as all identical, all different, partially identical, etc., then for each case, it is necessary to reasonably determine the cell to which the at least one information field of the multi-cell scheduling downlink control information is actually applied.

For a case where the cell to which the at least one information field of the multi-cell scheduling downlink control information is capable of being applied is all identical with the at least one first cell scheduled by the multi-cell scheduling downlink control information, it may be determined that the at least one first cell scheduled by the multi-cell scheduling downlink control information is the cell to which the at least one information field of the multi-cell scheduling downlink control information is applied

For a case where the cell to which the at least one information field of the multi-cell scheduling downlink control information is capable of being applied is all different from or partially identical with the at least one first cell scheduled by the multi-cell scheduling downlink control information, a process of determining the cell to which the at least one information field of the multi-cell scheduling downlink control information is actually applied is relatively complex, details of which will be described in the following embodiments..

The determination manner for at least one first cell actually scheduled by the multi-cell scheduling downlink control information received each time can be set as needed, for example, can be indicated by the network device or determined based on the predefined rule, which will may be limited in the present disclosure.

In an embodiment, the multi-cell scheduling downlink control information may be simply referred to as MC-DCI, for example. The MC-DCI is configured to schedule a plurality of cells, specifically it may be configured to schedule data from the plurality of cells, such as scheduling a physical uplink shared channel (PUSCH), a physical downlink shared channel (PDSCH), and the like of one or more cells in the plurality of cells, thereby realizing scheduling of the plurality of cells through one DCI. Here, MC represents multi-cell.

In an embodiment, a format of the multi-cell scheduling downlink control information may be the same as a format of a traditional (legacy) DCI (e.g., a DCI format 0_0, a DCI format 0_1, etc.), or may be a newly defined format, e.g., a DCI format 0_3, a DCI format 1_3, etc.

In an embodiment, the multi-cell scheduling downlink control information may be scrambled by an RNTI, for example, may be scrambled by a C-RNTI, or may be scrambled by a newly defined RNTI.

The multi-cell scheduling downlink control information may include a plurality of information fields. In a case of scheduling the cell with the multi-cell scheduling downlink control information, the information field of the multi-cell scheduling downlink control information may be applied to a scheduled cell, and the terminal may determine information of the scheduled cell to which the information field is applied, or perform an operation on the scheduled cell to which the information field is applied, according to information indicated by the information field. For example, taking a BWP information field in the multi-cell scheduling downlink control information as an example, it is determined that the BWP information field is applied to a cell, Cell#1, for example, then the terminal may perform a BWP switching operation on the Cell#1 according to information indicated by the BWP information field.

Due to demands of a network environment, the cell to which the information field of the multi-cell scheduling downlink control information is capable of being applied may be limited. According to an embodiment of the present disclosure, the terminal may determine the cell to which the at least one information field of the multi-cell scheduling downlink control information is capable of being applied according to the predefined rule or the indication signaling from the network device.

The multi-cell scheduling downlink control information may include the plurality of information fields. One part of the plurality of information fields is applied to all scheduled cells only, and other part of the information fields (such as a Type 1 information field) may only be applied to some of the scheduled cells in consideration of scheduling flexibility and MC DCI signaling overhead. Therefore, how to determine the cell to which the other part of the information fields is actually applied is an urgent issue to be solved.

According to embodiments of the present disclosure, the network device may determine according the predefined rule or indicate to the terminal via the indication signaling, the cell to which the at least one information field of the multi-cell scheduling downlink control information is capable of being applied. Then when the network device sent the multi-cell scheduling downlink control information to the terminal, the network device may determine the at least one first cell scheduled by the multi-cell scheduling downlink control information, namely, a cell actually scheduled by the multi-cell scheduling downlink control information (MC-DCI). Further, the network device may determine the cell to which the at least one information field of the multi-cell scheduling downlink control information is applied according to a relationship between the first cell actually scheduled by the MC-DCI and the cell to which the at least one information field of the multi-cell scheduling downlink control information is capable of being applied. Accordingly, it may be reasonably determined the cell to which the at least one information field of the multi-cell scheduling downlink control information is specifically applied, even if the cell actually scheduled by the multi-cell scheduling downlink control information is different from the cell to which the at least one information field of the multi-cell scheduling downlink control information is capable of being applied.

The at least one information field of the multi-cell scheduling downlink control information may be applied to some of the scheduled cells only, rather than being applied to all scheduled cells. For example, the at least one information field of the multi-cell scheduling downlink control information may be the Type 1-C information field in the multi-cell scheduling downlink control information, or may be other types of information fields. Selection can be made specifically as needed, which will not be limited the present disclosure.

In an embodiment of the present disclosure, the indication may include at least one of:
an RRC layer signaling, namely, an RRC signaling;
a media access control layer signaling, such as a MAC CE; or
a physical layer signaling, such as DCI.

In an embodiment of the present disclosure, the cell to which the at least one information field of the multi-cell scheduling downlink control information is capable of being applied may include at least one of:
at least one second cell to which the at least one information field of the multi-cell scheduling downlink control information is capable of being applied, for example, the at least one information field of the multi-cell scheduling downlink control information is capable of being applied to some cells among cells capable of being scheduled by the multi-cell scheduling downlink control information (some cells belong to the second cell); or
no cell to which the at least one information field of the multi-cell scheduling downlink control information is capable of being applied, for example, the at least one information field of the multi-cell scheduling downlink control information is incapable of being applied to any cell in the cells capable of being scheduled by the multi-cell scheduling downlink control information.

The cell to which the at least one information field of the multi-cell scheduling downlink control information is capable of being applied may be understood as a cell set. In a case where the at least one information field of the multi-cell scheduling downlink control information is incapable of being applied to any cell, the set is a null set. In a case where the at least one information field of the multi-cell scheduling downlink control information is capable of being applied to at least one second cell, an element included in the set is the at least one second cell.

In an embodiment, there may be no intersection between the first cell actually scheduled by the multi-cell scheduling downlink control information and the cell to which the at least one information field of the multi-cell scheduling downlink control information is capable of being applied, this case may be called an error case. The terminal may not parse the multi-cell scheduling downlink control information, or the terminal may continue to parse the multi-cell scheduling downlink control information, but at least one information field of the multi-cell scheduling downlink control information is not applied to any cell, which is beneficial to saving terminal resources.

In an embodiment, in a case where the cell to which the at least one information field of the multi-cell scheduling downlink control information is capable of being applied is the at least one second cell to which the at least one information field of the multi-cell scheduling downlink control information is capable of being applied, there may be or may not be an intersection between the first cell actually scheduled by the multi-cell scheduling downlink control information and the second cell. The specific situation is described in detail in subsequent embodiments.

The following embodiments mainly illustrate the technical solution of the present disclosure for an example of the cell to which the at least one information field of the multi-cell scheduling downlink control information is capable of being applied being the at least one second cell to which the at least one information field of the multi-cell scheduling downlink control information is capable of being applied.

FIG. 8 is a schematic flowchart illustrating a method for determining a cell according to an embodiment of the present disclosure. As shown in FIG. 8, determining according to the predefined rule or indicating to the terminal via the indication signaling, the cell to which the at least one information field of the multi-cell scheduling downlink control information is capable of being applied includes the following step.

In step 801, at least one second cell to which each information field of the at least one information field is capable of being applied is determined according to the predefined rule or indicated to the terminal via the indication signaling.

In an embodiment, the at least one information field of the multi-cell scheduling downlink control information may include a plurality of information fields. Cells to which respective information fields of the plurality of information fields are capable of being applied may be different, for example, partially different, or completely different. According to this embodiment, the network device may determine according to the predefined rule or indicate to the terminal via the indication signaling, the second cell to which each information field is capable of being applied.

For example, for two information fields, field#1 and field#2, it may be determined that the field#1 is capable of being applied to a cell Cell#1 and a cell Cell#2, and it may be determined that the field#2 is capable of being applied to the cell Cell#2 and a cell Cell#3.

FIG. 9 is a schematic flowchart illustrating a method for determining a cell according to an embodiment of the present disclosure. As shown in FIG. 9, determining according to the predefined rule or indicating to the terminal via the indication signaling, the cell to which the at least one information field of the multi-cell scheduling downlink control information is capable of being applied includes the following step.

In step 901, at least one second cell to which the at least one information field is capable of being jointly applied is determined according to the predefined rule or indicating to the terminal via the indication signaling.

In an embodiment, the at least one information field of the multi-cell scheduling downlink control information may include a plurality of information fields. Cells to which respective information fields of the plurality of information fields are capable of being applied may be the identical. According to this embodiment, the network device may determine according to the predefined rule or indicate to the terminal via the indication signaling, the second cell to which the plurality of information fields are capable of being jointly applied.

For example, for two information fields, field#1 and field#2, it may be determined that the field#1 and the field#2 are capable of being jointly applied to a cell Cell#1 and a cell Cell#2. That is, the field#1 is capable of being applied to the cell Cell#1 and the cell Cell#2, and the field#2 is capable of being applied to the cell Cell#1 and the cell Cell#2.

In an embodiment, the predefined rule includes at least one of:
determining a cell with an identifier being a predefined identifier as the at least one second cell; or
a cell corresponding to a predefined sorting number being as the at least one second cell in a case where a cell capable of being scheduled by the multi-cell scheduling downlink control information or the at least one first cell is sorted in a predefined order.

In an embodiment, the predefined rule may define that the cell with an identifier (e.g., cell ID) being the predefined identifier is the second cell, and the terminal may determine that the cell having the predefined identifier is the second cell.

For example, if the predefined identifiers are 1 and 3, then two cells, Cell#1 (cell ID is 1) and Cell#3 (cell ID is 3), may be determined as the second cells. Further, the cell to which the at least one information field of the multi-cell scheduling downlink control information is applied may be determined based on a relationship between the second cell and the first cell, which will be specifically described in the subsequent embodiments.

In an embodiment, the predefined rule may define that the cell corresponding to the predefined sorting number is the second cell in a case where cells are sorted in the predefined order. The cells used to be sorted include, but are not limited to, a cell capable of being scheduled by the multi-cell scheduling downlink control information, or the at least one first cell. Then the terminal may determine the cell corresponding to the predefined sorting number as the second cell among the sorted cells.

For example, in a case where the predefined sorting numbers are 1 and 3, then it may be determined that among the cells sorted in the predefined order, cells with an order number 1 and an order number 3 are the second cells. Further, the cell to which the at least one information field of the multi-cell scheduling downlink control information is applied may be determined based on a relationship between the second cell and the first cell, which will be specifically described in the subsequent embodiments.

It should be noted that the predefined order is not limited to the order in the above embodiment, and may be, for example, a descending order of the cell identifiers or an ascending order of the cell identifiers, etc.

In an embodiment, indicating to the terminal via the indication signaling, the at least one second cell to which the at least one information field of the multi-cell scheduling downlink control information is capable of being applied includes at least one of:
indicating to the terminal via the indication signaling, that a cell corresponding to an identifier is the at least one second cell; or
indicating to the terminal via the indication signaling, that a cell corresponding to an order number indicated by the indication signaling as the at least one second cell in a case where a cell capable of being scheduled by the multi-cell scheduling downlink control information or the at least one first cell is sorted in a predefined order.

In an embodiment, the network device may indicate the identifier carried by the indication signaling to the terminal. The terminal may determine that a cell corresponding to the identifier indicated by the indication signaling is the second cell. The identifier indicated by the network device may be an identifier of a cell in the cell capable of being scheduled by multi-cell scheduling downlink control information.

For example, the identifiers indicated by the network device through the indication signaling are 1 and 3, then the terminal may determine that two cells, Cell#1 (the cell ID is 1) and Cell#3 (the cell ID is 3), are the second cells.

In an embodiment, the network device may indicate the order number carried by the indication signaling to the terminal. The terminal may determine that the cell corresponding to the order number indicated by the indication signaling is the second cell among the cell sorted in the predefined order. The cells used to be sorted include, but are not limited to, a cell capable of being scheduled by the multi-cell scheduling downlink control information, or the at least one first cell.

Taking sorting of four cells, Cell#1, Cell#2, Cell#3 and Cell#4, as an example, a sorted result is Cell#2, Cell#4, Cell#1 and Cell#3. In response to the order numbers indicated by the network device being 1 and 3, it may be determined that Cell#2 sorted first and Cell#1 sorted third are the second cells. In response to the order numbers indicated by the network device being 3 and 5, since there is no cell sorted fifth in the sorting, only Cell#1 sorted third is determined as the second cell. In response to the order number indicated by the network device being 5, since there is no cell sorted fifth in the sorting, it may be determined that there is no second cell, or the second cell is described as a null set. In this case, the at least one information field in the multi-cell scheduling downlink control information is incapable of being applied to any cell. For sorting of the at least one first cell, it may be determined that at least one information field of the multi-cell scheduling downlink control information is incapable of being applied to any cell.

It should be noted that the predefined order is not limited to the order in the above embodiment, and may be, for example, a descending order of the cell identifiers or an ascending order of the cell identifiers, etc.

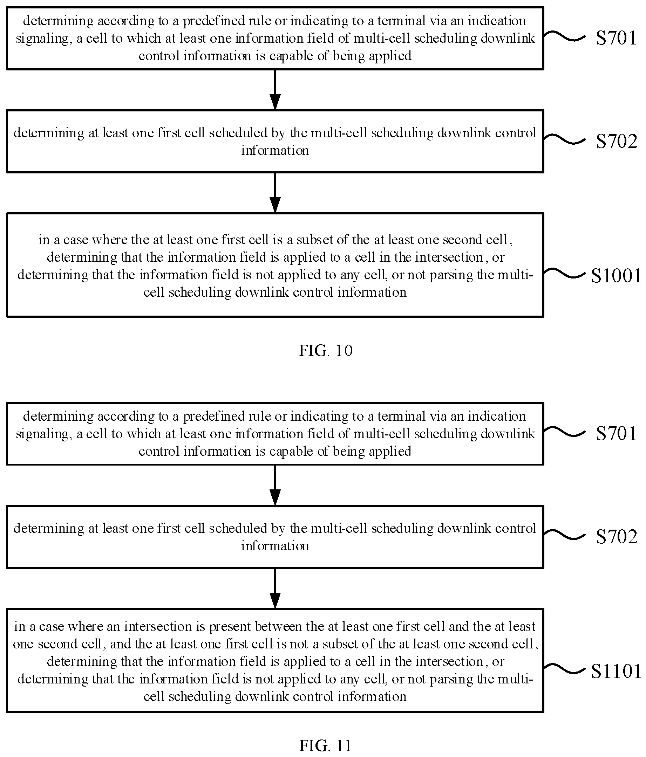

FIG. 10 is a schematic flowchart illustrating a method for determining a cell according to an embodiment of the present disclosure. As shown in FIG. 10, determining the cell to which the at least one information field of the multi-cell scheduling downlink control information is applied according to the relationship between the at least one first cell and the cell to which the at least one information field of the multi-cell scheduling downlink control information is capable of being applied includes the following step.

In step S1001, in a case where the at least one first cell is a subset of the at least one second cell, it is determined that the information field is applied to the at least one first cell, or it is determined that the information field is not applied to any cell, or parsing the multi-cell scheduling downlink control information is not performed.

In an embodiment, in a case where the at least one first cell is a subset of the at least one second cell, that is, the first cell scheduled by the multi-cell scheduling downlink control information belongs to the second cell to which the at least one information field of the multi-cell scheduling downlink control information is capable of being applied, it may be determined that the at least one information field of the multi-cell scheduling downlink control information is applied to the at least one first cell, or, it may be determined that the at least one information field in the multi-cell scheduling downlink control information is not applied to any cell, or, parsing the multi-cell scheduling downlink control information is not performed.

The following takes BWP information field of the multi-cell scheduling downlink control information as an example.

For example, the cell corresponding to an identifier indicated to the terminal via the indication signaling is the at least one second cell. The second cells to which the BWP information field is capable of being applied are the cell Cell#1 and the cell Cell#2, and the first cell scheduled by the multi-cell scheduling downlink control information sent to the terminal this time is Cell#1. It may be determined that {Cell#1} is a subset of {Cell#1, Cell#2}, then it may be determined that the BWP information field is applied to Cell#1.

For example, it may be indicated to the terminal via the indication signaling that, in a case where the cells capable of being scheduled by the multi-cell scheduling downlink control information or the at least one first cell are sorted in the predefined order, the cell corresponding to the order number indicated by the indication signaling is the at least one second cell. For example, the second cells to which the BWP information field is capable of being applied are cells corresponding to order numbers 1 and 2. The first cell scheduled by the multi-cell scheduling downlink control information sent to the terminal this time is Cell#1, which is sorted in the predefined order as Cell#1, among which there is only the cell Cell#1 sorted first, without a cell sorted second. A set {cell corresponding to order number 1} is a subset of a set of second cells {cell corresponding to order number 1, cell corresponding to order number 2}. Further, it may be determined that the BWP information field is applied to the cell Cell#1 corresponding to the order number 1, or it may be determined that the BWP information field is not applied to any cell, or parsing the multi-cell scheduling downlink control information received this time is not performed.

In an embodiment, in a case where the at least one second cell is a subset of the at least one first cell, it is determined that the information field is applied to the at least one second cell, or it is determined that the information field is not applied to any cell, or parsing the multi-cell scheduling downlink control information is not performed.

In an embodiment, in a case where the at least one second cell is a subset of the at least one first cell, that is, the second cell to which the at least one information field of the multi-cell scheduling downlink control information is capable of being applied belongs to the first cell scheduled by the multi-cell scheduling downlink control information, it may be determined that the at least one information field of the multi-cell scheduling downlink control information is applied to the at least one second cell, or, it may be determined that the at least one information field in the multi-cell scheduling downlink control information is not applied to any cell, or, parsing the multi-cell scheduling downlink control information is not performed.

The following takes BWP information field of the multi-cell scheduling downlink control information as an example.

For example, the cell corresponding to the identifier indicated to the terminal via the indication signaling is the at least one second cell. The second cells to which the BWP information field is capable of being applied are the cell Cell#1, and the first cells scheduled by the multi-cell scheduling downlink control information received this time are Cell#1 and Cell#2. It may be determined that {Cell#1} is a subset of {Cell#1, Cell#2}, then it may be determined that the BWP information field is applied to Cell#1, or it may be determined that the BWP information field is not applied to any cell, or parsing the multi-cell scheduling downlink control information received this time is not performed.

For example, it may be indicated to the terminal via the indication signaling that, in a case where the cells capable of being scheduled by the multi-cell scheduling downlink control information or the at least one first cell are sorted in the predefined order, the cell corresponding to the order number indicated by the indication signaling is the at least one second cell. For example, in a case where the cells capable of being scheduled by the multi-cell scheduling downlink control information are sorted in the predefined order, it is determined that the cell corresponding to the predefined sorting or order number is the at least one second cell. The second cell to which the BWP information field is capable of being applied is a cell corresponding to an order number 2. The first cells scheduled by the multi-cell scheduling downlink control information sent to the terminal this time are Cell#1 and Cell#2, which are sorted in the predefined order (such as, an ascending order of identifiers) as Cell#1, Cell#2. The sorting includes not only the cell with the order number 2, but also the cell with the order number 1. It may be determined that a set of second cells {cell corresponding to order number 2} is a subset of a set of first cells {cell corresponding to order number 1, cell corresponding to order number 2}. Further, it may be determined that the BWP information field is applied to the cell Cell#2 corresponding to the order number 2, or it may be determined that the BWP information field is not applied to any cell, or parsing the multi-cell scheduling downlink control information received this time is not performed.

FIG. 11 is a schematic flowchart illustrating a method for determining a cell according to an embodiment of the present disclosure. As shown in FIG. 11, determining the cell to which the at least one information field of the multi-cell scheduling downlink control information is applied according to the relationship between the at least one first cell and the cell to which the at least one information field of the multi-cell scheduling downlink control information is capable of being applied includes the following step.

In step S1101, in a case where an intersection is present between the at least one first cell and the at least one second cell, and the at least one first cell is not a subset of the at least one second cell, it is determined that the information field is applied to a cell in the intersection, or it is determined that the information field is not applied to any cell, or parsing the multi-cell scheduling downlink control information is not performed.

In an embodiment, the intersection is present between the at least one first cell and the at least one second cell, and the at least one first cell is not a subset of the at least one second cell, that is, some of the first cells scheduled by the multi-cell scheduling downlink control information belong to the second cell to which the at least one information field of the multi-cell scheduling downlink control information is capable of being applied, then the at least one first cell and the at least one second cell have some cells that are the same, while others are different.

For this case, three approaches may be adopted. A first case is to mainly consider presence of conflicts, then this case may be regarded as an error case, and it may be determined that the terminal does not parse the multi-cell scheduling downlink control information. A second case is to mainly consider a part without conflicts, that is, the intersection between the at least one first cell and the at least one second cell, then it may be determined that the at least one information field of the multi-cell scheduling downlink control information is applied to the cell in the intersection. A third case is to determine that the information field is not applied to any cell. In this case, the terminal still needs to parse the multi-cell scheduling downlink control information, but the information field in the multi-cell scheduling downlink control information (that is, at least one information field in the multi-cell scheduling downlink control information) is not applied to any cell, and other information fields in the multi-cell scheduling downlink control information are still normally applied to the cells to which they should be applied.

The following takes BWP information field of the multi-cell scheduling downlink control information as an example.

For example, the cell corresponding to the identifier indicated to the terminal via the indication signaling is the at least one second cell. The second cells to which the BWP information field is capable of being applied are the cell Cell#1 and the cell Cell#2, and the first cells scheduled by the multi-cell scheduling downlink control information sent to the terminal this time are Cell#1 and Cell#3. It may be determined that there is an intersection {Cell#1} between {Cell#1, Cell#3} and {Cell#1, Cell#2}. For this case, it may be determined that the BWP information field is applied to the cell Cell#1 in the intersection {Cell#1}, or may regard this case as the error case, it may be determined that the terminal does not parse the multi-cell scheduling downlink control information; or, the terminal may determine that the BWP information field is not applied to any cell, but information fields other than the BWP information field are still normally applied to the cell to which they should be applied, for example, a FDRA field is still normally applied to the cell to which the FDRA field is applied.

For example, it may be indicated to the terminal via the indication signaling that, in a case where the cells capable of being scheduled by the multi-cell scheduling downlink control information or the at least one first cell are sorted in the predefined order, the cell corresponding to the order number indicated by the indication signaling is the at least one second cell. For example, the second cells to which the BWP information field is capable of being applied are cells corresponding to order numbers 1 and 3. The first cells scheduled by the multi-cell scheduling downlink control information sent to the terminal this time are Cell#1 and Cell#3, which are sorted in the predefined order as Cell#1 and Cell#3, among which there are only cells sorted first and second, without a cell sorted third. It may be determined that the second cell is Cell#1, and there is an intersection {Cell#1} between the set of second cells {Cell#1} and the set of first cells {Cell#1, Cell#2}, and the set {Cell#1, Cell#2} is not the subset of the sent {Cell#1}. For this case, it may be determined that the BWP information field is applied to the cell Cell#1 in the intersection {Cell#1}, or regard this case as the error case, and it may be determined that the terminal does not parse the multi-cell scheduling downlink control information; or, the terminal may determine that the BWP information field is not applied to any cell, but information fields other than the BWP information field are still normally applied to the cell to which they should be applied, for example, the FDRA field is still normally applied to the cell to which the FDRA field is applied.

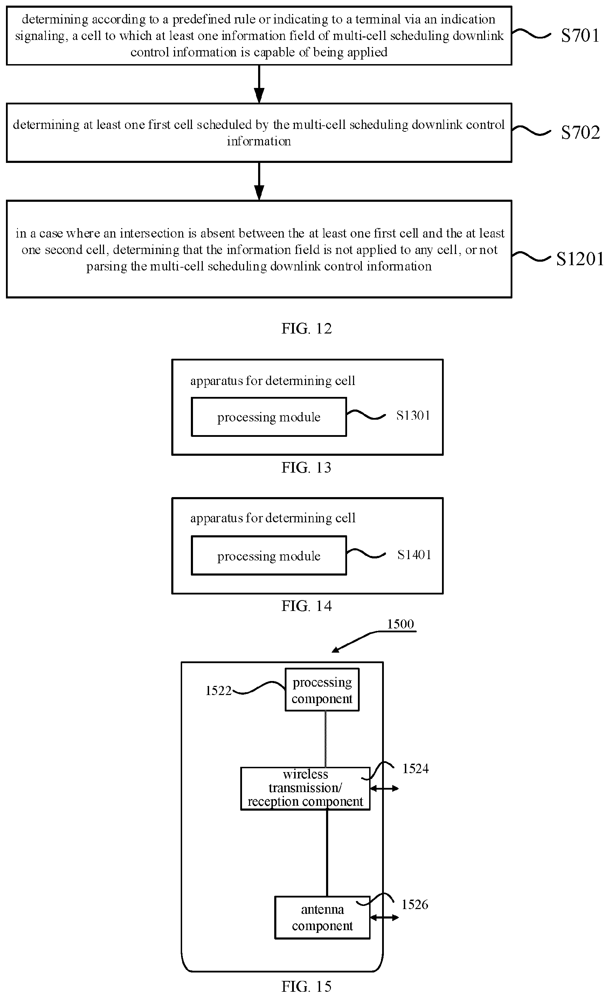

FIG. 12 is a schematic flowchart illustrating a method for determining a cell according to an embodiment of the present disclosure. As shown in FIG. 12, determining the cell to which the at least one information field of the multi-cell scheduling downlink control information is applied according to the relationship between the at least one first cell and the cell to which the at least one information field of the multi-cell scheduling downlink control information is capable of being applied includes the following step.

In step S1201, in a case where an intersection is absent between the at least one first cell and the at least one second cell, it is determined that the information field is not applied to any cell, or parsing the multi-cell scheduling downlink control information is not performed.

In an embodiment, in a case where an intersection is absent between the at least one first cell and the at least one second cell, the first cell scheduled by the multi-cell scheduling downlink control information has no same cell with the second cell to which the at least one information field of the multi-cell scheduling downlink control information is capable of being applied, then the at least one information field in the multi-cell scheduling downlink control information is applied to any cell.

Therefore, for this case, it may be determined that the at least one information field in the multi-cell scheduling downlink control information is applied to any cell, or this case is regarded as an error case, and the terminal does not parse the multi-cell scheduling downlink control information.

It should be noted that determining that the at least one information field in the multi-cell scheduling downlink control information is applied to any cell is different from determining that the terminal does not parse the multi-cell scheduling downlink control information. Determining that the at least one information field of the multi-cell scheduling downlink control information is applied to any cell, which means that for the at least one information field of the multi-cell scheduling downlink control information, it is not applied to any cell, but for information fields other than the at least one information field of the multi-cell scheduling downlink control information, it may still be normally applied to the cell I scheduled by the multi-cell scheduling downlink control information.

The following takes BWP information field of the multi-cell scheduling downlink control information as an example.

For example, the cell corresponding to the identifier indicated to the terminal via the indication signaling is the at least one second cell. The second cells to which the BWP information field is capable of being applied are the cell Cell#1 and the cell Cell#3, and the first cells scheduled by the multi-cell scheduling downlink control information sent to the terminal this time are Cell#2 and Cell#3. It may be determined that there is no intersection between {Cell#1, Cell#3} and {Cell#2, Cell#4}. For this case, it may be determined that the BWP information field is not applied to any cell, or may regard this case as the error case, and it may be determined that the terminal does not parse the multi-cell scheduling downlink control information.

For example, it may be indicated to the terminal via the indication signaling that, in a case where the cells capable of being scheduled by the multi-cell scheduling downlink control information or the at least one first cell are sorted in the predefined order, the cell corresponding to the order number indicated by the indication signaling is the at least one second cell. For example, the second cells to which the BWP information field is capable of being applied are cells corresponding to order numbers 3 and 4. The first cells scheduled by the multi-cell scheduling downlink control information sent to the terminal this time are Cell#2 and Cell#4, which are sorted in the predefined order as Cell#2 and Cell#4, among which there are only cells sorted first and second, without cells sorted third and fourth. It may be determined that the set of second cells is a null set, and there is no intersection between the set of second cells and the set of first cells {Cell#2, Cell#4}. For this case, it may be determined that the BWP information field is not applied to any cell, or may regard this case as the error case, and it may be determined that the terminal does not parse the multi-cell scheduling downlink control information.

In an embodiment, the terminal does not expect that an intersection is absent between the at least one first cell scheduled by the multi-cell scheduling downlink control information and the at least one second cell.

Since there is no intersection between the first cell and the second cell, the terminal may determine that the at least one information field of the multi-cell scheduling downlink control information is not applied to any cell, or does not parse the multi-cell scheduling downlink control information, which wastes communication resources to a certain extent. Therefore, the terminal does not expect that an intersection is absent between the at least one first cell scheduled by the multi-cell scheduling downlink control information and the at least one second cell. Correspondingly, in a case of sending the multi-cell scheduling downlink control information to the terminal, the network device may set that the intersection between the at least one first cell scheduled by the multi-cell scheduling downlink control information and the at least one second cell, which is beneficial for avoiding waste of the communication resources.

Corresponding to above embodiments of the method for determining the cell, the present disclosure further provides embodiments of an apparatus for determining the cell.

FIG. 13 is a schematic block diagram illustrating an apparatus for determining a cell according to an embodiment of the present disclosure. The apparatus for determining the cell shown in the present embodiment may be a terminal, or a device formed by modules in a terminal. The terminal includes but is not limited to communication devices such as a mobile phone, a tablet computer, a wearable device, a sensor, and an Internet of Things device. The terminal may communicate with a network device, and the network device includes but is not limited to network devices in 4G, 5G, 6G and other communication systems, such as a base station, a core network, and the like.

As shown in FIG. 13, the apparatus for determining the cell includes:
a processing module 1001 configured to determine, according to a predefined rule or an indication signaling from a network device, a cell to which at least one information field of multi-cell scheduling downlink control information is capable of being applied, determine at least one first cell scheduled by the multi-cell scheduling downlink control information, and determine a cell to which the at least one information field of the multi-cell scheduling downlink control information is applied according to a relationship between the at least one first cell and the cell to which the at least one information field of the multi-cell scheduling downlink control information is capable of being applied.

In an embodiment, the indication signaling includes at least one of:
a radio resource control layer signaling;
a media access control layer signaling; or
a physical layer signaling.

In an embodiment, the cell to which the at least one information field of the multi-cell scheduling downlink control information is capable of being applied includes at least one of:
at least one second cell to which the at least one information field of the multi-cell scheduling downlink control information is capable of being applied; or
no cell to which the at least one information field of the multi-cell scheduling downlink control information is capable of being applied.

In an embodiment, the processing module 1001 is configured to determine, according to the predefined rule or the indication signaling from the network device, at least one second cell to which each information field of the at least one information field is capable of being applied.

In an embodiment, the processing module 1001 is configured to determine, according to the predefined rule or the indication signaling from the network device, at least one second cell to which the at least one information field is capable of being jointly applied.

In an embodiment, the predefined rule includes at least one of:
determining a cell with an identifier being a predefined identifier as the at least one second cell; or
a cell corresponding to a predefined sorting number being as the at least one second cell in a case where a cell capable of being scheduled by the multi-cell scheduling downlink control information or the at least one first cell is sorted in a predefined order.

In an embodiment, determining, according to the indication signaling from the network device, the at least one second cell to which the at least one information field of the multi-cell scheduling downlink control information is capable of being applied includes at least one of:
determining a cell corresponding to an identifier indicated by the indication signaling as the at least one second cell; or
determining a cell corresponding to an order number indicated by the indication signaling as the at least one second cell in a case where a cell capable of being scheduled by the multi-cell scheduling downlink control information or the at least one first cell is sorted in a predefined order.

In an embodiment, the processing module 1001 is configured to determine, that the information field is applied to the at least one first cell in a case where the at least one first cell is a subset of the at least one second cell.

In an embodiment, the processing module 1001 is configured to, in a case where an intersection is present between the at least one first cell and the at least one second cell, and the at least one first cell is not a subset of the at least one second cell, determine that the information field is applied to a cell in the intersection, or determine that the information field is not applied to any cell, or does not parse the multi-cell scheduling downlink control information.

In an embodiment, the processing module 1001 is configured to determine, in a case where an intersection is absent between the at least one first cell and the at least one second cell, determine that the information field is not applied to any cell, or does not parse the multi-cell scheduling downlink control information.

In an embodiment, the terminal does not expect that an intersection is absent between the at least one first cell scheduled by the multi-cell scheduling downlink control information and the at least one second cell.

FIG. 14 is a schematic block diagram illustrating an apparatus for determining a cell according to an embodiment of the present disclosure. The apparatus for determining the cell shown in the present embodiment may be a network device, or a device formed by modules in a network device. The network device may communicate with a terminal. The terminal includes but is not limited to communication devices such as a mobile phone, a tablet computer, a wearable device, a sensor, and an Internet of Things device. The network device includes but is not limited to network devices in 4G, 5G, 6G and other communication systems, such as a base station, a core network, and the like.

As shown in FIG. 14, the apparatus for determining the cell includes:
a processing module 1401 configured to determine according to a predefined rule or indicating to a terminal via an indication signaling, a cell to which at least one information field of multi-cell scheduling downlink control information is capable of being applied, determine at least one first cell scheduled by the multi-cell scheduling downlink control information, and determine a cell to which the at least one information field of the multi-cell scheduling downlink control information is applied according to a relationship between the at least one first cell and the cell to which the at least one information field of the multi-cell scheduling downlink control information is capable of being applied.

In an embodiment, the indication signaling includes at least one of:
a radio resource control layer signaling;
a media access control layer signaling; or
a physical layer signaling.

In an embodiment, the cell to which the at least one information field of the multi-cell scheduling downlink control information is capable of being applied includes at least one of:
at least one second cell to which the at least one information field of the multi-cell scheduling downlink control information is capable of being applied; or
no cell to which the at least one information field of the multi-cell scheduling downlink control information is capable of being applied.

In an embodiment, the processing module 1401 is configured to determine according to the predefined rule or indicate to the terminal via the indication signaling, at least one second cell to which each information field of the at least one information field is capable of being applied.

In an embodiment, the processing module 1401 is configured to determine according to the predefined rule or indicate to the terminal via the indication signaling, at least one second cell to which the at least one information field is capable of being jointly applied.

In an embodiment, the predefined rule includes at least one of:
determining a cell with an identifier being a predefined identifier as the at least one second cell; or
a cell corresponding to a predefined sorting number being as the at least one second cell in a case where the cell capable of being scheduled by the multi-cell scheduling downlink control information or the at least one first cell is sorted in a predefined order.

In an embodiment, indicating to the terminal via the indication signaling, the at least one second cell to which the at least one information field of the multi-cell scheduling downlink control information is capable of being applied includes at least one of:
indicating to the terminal via the indication signaling, that a cell corresponding to an identifier is the at least one second cell; or
indicating to the terminal via the indication signaling, that a cell corresponding to an order number indicated by the indication signaling as the at least one second cell in a case where a cell capable of being scheduled by the multi-cell scheduling downlink control information or the at least one first cell is sorted in a predefined order.

In an embodiment, the processing module 1401 is configured to determine that the information field is applied to the at least one first cell in a case where the at least one first cell is a subset of the at least one second cell.

In an embodiment, the processing module 1401 is configured to in a case where an intersection is present between the at least one first cell and the at least one second cell, and the at least one first cell is not a subset of the at least one second cell, determine that the information field is applied to a cell in the intersection, or determine that the information field is not applied to any cell, or does not parse the multi-cell scheduling downlink control information.

In an embodiment, the processing module 1401 is configured to in a case where an intersection is absent between the at least one first cell and the at least one second cell, determine that the information field is not applied to any cell, or does not parse the multi-cell scheduling downlink control information.

In an embodiment, the terminal does not expect that an intersection is absent between the at least one first cell scheduled by the multi-cell scheduling downlink control information and the at least one second cell.

With respect to the apparatuses in the above embodiments, the specific manners for performing operations for individual modules therein have been described in detail in the embodiments regarding the methods for determining the cell, which will not be elaborated herein.

Since the apparatus embodiments substantially correspond to the method embodiments, reference is made to the partial description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

Embodiments of the present disclosure further provides a system for determining a cell, including: a terminal, and a network device, in which the terminal is configured to implement the method for determining the cell performed by the terminal as described in any of above embodiments, and the network device is configured to implement the method for determining the cell performed by the network device as described in any of above embodiments.

Embodiments of the present disclosure further provides a communication device, including: a processor; and a memory for storing a computer program, in which in a case where the computer program is executed by the processor, the method for determining the cell performed by the terminal as described in any of above embodiments is implemented.

Embodiments of the present disclosure further provides a communication device, including: a processor; and a memory for storing a computer program, in which in a case where the computer program is executed by the processor, the method for determining the cell performed by the network device as described in any of above embodiments is implemented.

Embodiments of the present disclosure further provides a computer-readable storage medium, configured to store a computer program that, when executed by a processor, cause the method for determining the cell performed by the terminal as described in any of above embodiments to be implemented.

Embodiments of the present disclosure further provides a computer-readable storage medium, configured to store a computer program that, when executed by a processor, cause the method for determining the cell performed by the network device as described in any of above embodiments to be implemented.

FIG. 15 is a schematic block diagram illustrating a device for determining a cell according to an embodiment of the present disclosure. The device 1500 may be provided as a base station. Referring to FIG. 15, the device 1500 includes a processing component 1522, a wireless transmission/reception component 1524, an antenna component 1526, and a signal processing portion specific to a wireless interface. The processing component 1522 may further include one or more processors. One of the processors in the processing component 1522 may be configured to implement the method for determining the cell performed by the network device as described in any of the above embodiments.

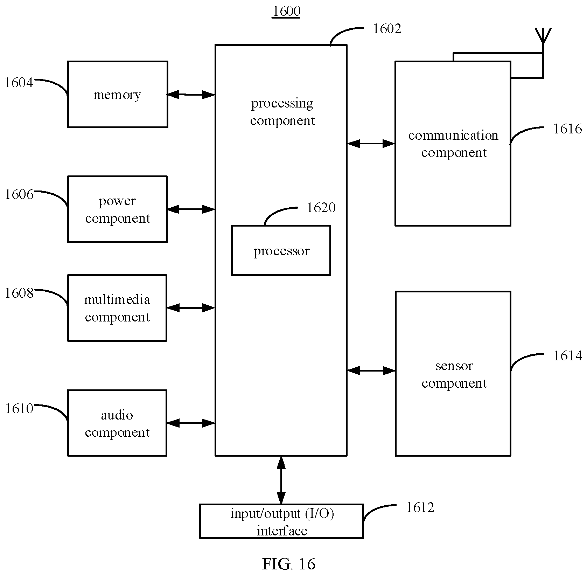

FIG. 16 is a schematic block diagram illustrating a device 1600 for determining a cell according to an embodiment of the present disclosure. For example, the device 1600 can be a mobile phone, a computer, a digital broadcast terminal, a messaging device, a game console, a tablet device, a medical device, a fitness device, a personal digital assistant, or the like.

Referring to FIG. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, phone calls, data communications, camera operations, and recording operations. The processing component 1602 can include one or more processors 1620 to execute instructions to perform all or some of the steps in the above-described method for determining a cell performed by the terminal. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, videos, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and/or the rear camera may receive an external multimedia datum while the device 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as keyboards, click wheels, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600, relative positioning of components, e.g., the display and the keypad, of the device 1600, a change in position of the device 1600 or a component of the device 1600, a presence or absence of user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may further include a light sensor, such as a CMOS or CCD image sensor, for use in imaging applications. In some embodiments, the sensor component 1614 may further include an accelerometer sensor, a gyroscope sensor, a magnetic sensor, a pressure sensor, or a temperature sensor.

The communication component 1616 is configured to facilitate communication, wired or wireless, between the device 1600 and other devices. The device 1600 can access a wireless network based on a communication standard, such as Wi-Fi, 2G, 3G, 4G LTE, 5G NR, or a combination thereof. In an illustrative embodiment, the communication component 1616 receives a broadcast signal or broadcast associated information from an external broadcast management system via a broadcast channel. In an illustrative embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the method for determining a cell performed by the terminal in the above-mentioned embodiments.

In an illustrative embodiment, there is also provided a non-transitory computer readable storage medium including instructions, such as included in the memory 1604, executable by the processor 1620 in the device 1600, for completing the above-mentioned method for determining a cell performed by the terminal. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a ..." does not exclude the presence of additional identical elements in the process, method, article or device that comprises the said element.

The method and apparatus provided by embodiments of the present disclosure have been described in detail above. The principles and embodiments of the present disclosure have been described herein by applying specific examples, and the description of the above embodiments is only for helping to understand the methods and core ideas of the present disclosure. Moreover, those skilled in the art may change the specific embodiments and the scope of application according to the ideas of the present disclosure. In summary, the contents of the present specification should not be construed as limiting the present disclosure.

## Claims

1. A method for determining a cell, performed by a terminal, comprising:
determining, according to a predefined rule or an indication signaling from a network device, a cell to which at least one information field of multi-cell scheduling downlink control information is capable of being applied;
determining at least one first cell scheduled by the multi-cell scheduling downlink control information; and
determining a cell to which the at least one information field of the multi-cell scheduling downlink control information is applied according to a relationship between the at least one first cell and the cell to which the at least one information field of the multi-cell scheduling downlink control information is capable of being applied.

2. The method according to claim 1, wherein the indication signaling comprises at least one of:
a radio resource control layer signaling;
a media access control layer signaling; or
a physical layer signaling.

3. The method according to claim 1, wherein the cell to which the at least one information field of the multi-cell scheduling downlink control information is capable of being applied comprises at least one of:
at least one second cell to which the at least one information field of the multi-cell scheduling downlink control information is capable of being applied; or
no cell to which the at least one information field of the multi-cell scheduling downlink control information is capable of being applied.

4. The method according to claim 3, wherein determining, according to the predefined rule or the indication signaling from the network device, the cell to which the at least one information field of the multi-cell scheduling downlink control information is capable of being applied comprises:
determining, according to the predefined rule or the indication signaling from the network device, at least one second cell to which each information field of the at least one information field is capable of being applied.

5. The method according to claim 3, wherein determining, according to the predefined rule or the indication signaling from the network device, the cell to which the at least one information field of the multi-cell scheduling downlink control information is capable of being applied comprises:
determining, according to the predefined rule or the indication signaling from the network device, at least one second cell to which the at least one information field is capable of being jointly applied.

6. The method according to claim 3, wherein the predefined rule comprises at least one of:
determining a cell with an identifier being a predefined identifier as the at least one second cell; or
a cell corresponding to a predefined sorting number being as the at least one second cell in a case where a cell capable of being scheduled by the multi-cell scheduling downlink control information or the at least one first cell is sorted in a predefined order.

7. The method according to claim 3, wherein determining, according to the indication signaling from the network device, the at least one second cell to which the at least one information field of the multi-cell scheduling downlink control information is capable of being applied comprises at least one of:
determining a cell corresponding to an identifier indicated by the indication signaling as the at least one second cell; or
determining a cell corresponding to an order number indicated by the indication signaling as the at least one second cell in a case where a cell capable of being scheduled by the multi-cell scheduling downlink control information or the at least one first cell is sorted in a predefined order.

8. The method according to claim 3, wherein determining the cell to which the at least one information field of the multi-cell scheduling downlink control information is applied according to the relationship between the at least one first cell and the cell to which the at least one information field of the multi-cell scheduling downlink control information is capable of being applied comprises:
determining that the information field is applied to the at least one first cell in a case where the at least one first cell is a subset of the at least one second cell.

9. The method according to claim 3, wherein determining the cell to which the at least one information field of the multi-cell scheduling downlink control information is applied according to the relationship between the at least one first cell and the cell to which the at least one information field of the multi-cell scheduling downlink control information is capable of being applied comprises:
in a case where an intersection is present between the at least one first cell and the at least one second cell, and the at least one first cell is not a subset of the at least one second cell, determining that the information field is applied to a cell in the intersection, or determining that the information field is not applied to any cell, or not parsing the multi-cell scheduling downlink control information.

10. The method according to claim 3, wherein determining the cell to which the at least one information field of the multi-cell scheduling downlink control information is applied according to the relationship between the at least one first cell and the cell to which the at least one information field of the multi-cell scheduling downlink control information is capable of being applied comprises:
in a case where an intersection is absent between the at least one first cell and the at least one second cell, determining that the information field is not applied to any cell, or not parsing the multi-cell scheduling downlink control information.

11. The method according to claim 3, wherein the terminal does not expect that an intersection is absent between the at least one first cell scheduled by the multi-cell scheduling downlink control information and the at least one second cell.

12. A method for determining a cell, performed by a network device, comprising:
determining according to a predefined rule or indicating to a terminal via an indication signaling, a cell to which at least one information field of multi-cell scheduling downlink control information is capable of being applied;
determining at least one first cell scheduled by the multi-cell scheduling downlink control information; and
determining a cell to which the at least one information field of the multi-cell scheduling downlink control information is applied according to a relationship between the at least one first cell and the cell to which the at least one information field of the multi-cell scheduling downlink control information is capable of being applied.

13. The method according to claim 12, wherein the indication signaling comprises at least one of:
a radio resource control layer signaling;
a media access control layer signaling; or
a physical layer signaling.

14. The method according to claim 12, wherein the cell to which the at least one information field of the multi-cell scheduling downlink control information is capable of being applied comprises at least one of:
at least one second cell to which the at least one information field of the multi-cell scheduling downlink control information is capable of being applied; or
no cell to which the at least one information field of the multi-cell scheduling downlink control information is capable of being applied.

15. The method according to claim 14, wherein determining according to the predefined rule or indicating to the terminal via the indication signaling, the cell to which the at least one information field of the multi-cell scheduling downlink control information is capable of being applied comprises:
determining according to the predefined rule or indicating to the terminal via the indication signaling, at least one second cell to which each information field of the at least one information field is capable of being applied.

16. The method according to claim 14, wherein determining according to the predefined rule or indicating to the terminal via the indication signaling, the cell to which the at least one information field of the multi-cell scheduling downlink control information is capable of being applied comprises:
determining according to the predefined rule or indicating to the terminal via the indication signaling, at least one second cell to which the at least one information field is capable of being jointly applied.

17. The method according to claim 14, wherein the predefined rule comprises at least one of:
determining a cell with an identifier being a predefined identifier as the at least one second cell; or
a cell corresponding to a predefined sorting number being as the at least one second cell in a case where the cell capable of being scheduled by the multi-cell scheduling downlink control information or the at least one first cell is sorted in a predefined order.

18. The method according to claim 14, wherein indicating to the terminal via the indication signaling, the at least one second cell to which the at least one information field of the multi-cell scheduling downlink control information is capable of being applied comprises at least one of:
indicating to the terminal via the indication signaling, that a cell corresponding to an identifier is the at least one second cell; or
indicating to the terminal via the indication signaling, that a cell corresponding to an order number indicated by the indication signaling as the at least one second cell in a case where a cell capable of being scheduled by the multi-cell scheduling downlink control information or the at least one first cell is sorted in a predefined order.

19. The method according to claim 14, wherein determining the cell to which the at least one information field of the multi-cell scheduling downlink control information is applied according to the relationship between the at least one first cell and the cell to which the at least one information field of the multi-cell scheduling downlink control information is capable of being applied comprises:
determining that the information field is applied to the at least one first cell in a case where the at least one first cell is a subset of the at least one second cell.

20. The method according to claim 14, wherein determining the cell to which the at least one information field of the multi-cell scheduling downlink control information is applied according to the relationship between the at least one first cell and the cell to which the at least one information field of the multi-cell scheduling downlink control information is capable of being applied comprises:
in a case where an intersection is present between the at least one first cell and the at least one second cell, and the at least one first cell is not a subset of the at least one second cell, determining that the information field is applied to a cell in the intersection, or determining that the information field is not applied to any cell, or not parsing the multi-cell scheduling downlink control information.

21. The method according to claim 14, wherein determining the cell to which the at least one information field of the multi-cell scheduling downlink control information is applied according to the relationship between the at least one first cell and the cell to which the at least one information field of the multi-cell scheduling downlink control information is capable of being applied comprises:
in a case where an intersection is absent between the at least one first cell and the at least one second cell, determining that the information field is not applied to any cell, or not parsing the multi-cell scheduling downlink control information.

22. The method according to claim 14, wherein the terminal does not expect that an intersection is absent between the at least one first cell scheduled by the multi-cell scheduling downlink control information and the at least one second cell.

23. An apparatus for determining a cell, comprising:
a processing module configured to determine, according to a predefined rule or an indication signaling from a network device, a cell to which at least one information field of multi-cell scheduling downlink control information is capable of being applied, determine at least one first cell scheduled by the multi-cell scheduling downlink control information, and determine a cell to which the at least one information field of the multi-cell scheduling downlink control information is applied according to a relationship between the at least one first cell and the cell to which the at least one information field of the multi-cell scheduling downlink control information is capable of being applied.

24. An apparatus for determining a cell, comprising:
a processing module configured to determine according to a predefined rule or indicating to a terminal via an indication signaling, a cell to which at least one information field of multi-cell scheduling downlink control information is capable of being applied, determine at least one first cell scheduled by the multi-cell scheduling downlink control information, and determine a cell to which the at least one information field of the multi-cell scheduling downlink control information is applied according to a relationship between the at least one first cell and the cell to which the at least one information field of the multi-cell scheduling downlink control information is capable of being applied.

25. A system for determining a cell, comprising: a terminal, and a network device, wherein the terminal is configured to implement the method for determining the cell according to any one of claims 1 to 11, and the network device is configured to implement the method for determining the cell according to any one of claims 12 to 22.

26. A communication device, comprising:
a processor; and
a memory for storing a computer program,
wherein in a case where the computer program is executed by the processor, the method for determining the cell according to any one of claims 1 to 11 is implemented.

27. A communication device, comprising:
a processor; and
a memory for storing a computer program,
wherein in a case where the computer program is executed by the processor, the method for determining the cell according to any one of claims 13 to 22 is implemented.

28. A computer-readable storage medium, configured to store a computer program that, when executed by a processor, cause the method for determining the cell according to any one of claims 1 to 11 to be implemented.

29. A computer-readable storage medium, configured to store a computer program that, when executed by a processor, cause the method for determining the cell according to any one of claims 12 to 22 to be implemented.
